Europäisches Patentamt

European Patent Office

Office européen des brevets

(11) Publication number: **0 464 235 A1**

# EUROPEAN PATENT APPLICATION

(21) Application number: **90112609.4**

(22) Date of filing: **02.07.90**

(51) Int. Cl.⁵: **G05B 19/417**

(43) Date of publication of application:
**08.01.92 Bulletin 92/02**

(84) Designated Contracting States:
**DE FR GB IT**

(71) Applicant: **DSD, LTD.**
**3-26-2, Higashishinagawa**
**Shinagawa-ku, Tokyo(JP)**

(72) Inventor: **Uehiro, Kiyoshi**
**Sunterrace B, 33-7, Shikimidai, Asahi-ku**
**Yokohama-shi, Kanagawa-ken(JP)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**W-8000 München 40(DE)**

(54) Object-operation control system.

(57) Disclosed is an object-operation control system for controlling a driving source (3) which drives two- and three dimensionally the operation of, for example, a moving object (1), a telecamera or robot in special photographing. The control system comprises a driving source (3) for operating an object, the driving source being controlled by one-dimensional distance and time.

FIG.1

EP 0 464 235 A1

## BACKGROUND OF THE INVENTION

### Field of the Invention

The present invention relates to an object-operation control system for controlling a driving source which drives two-dimensionally and three-dimensionally the operation of, for example, a moving object and a telecamera such as a movie camera and a video camera or robot in special photographing.

### Description of the Prior Art

Generally, as the control of this kind, there can be mentioned a control of a work robot. In the control of the robot, teachings of operations are accomplished principally by work instructions by a program using a micro-computer, sequence control operated in accordance with a predetermined procedure and conditions, and play-back control in which the operation of hands is moved in conformity with the actual situation and the movements thereof are sequentially stored in a microcomputer.

In the aforementioned control of the work robot, a microcomputer is used, or a sequence circuit for serially performing successive drives timely is used. In case of using the above-described microcomputer, complicated programs are prepared, or the operation thereof is stored in a memory. In preparing the programs, particularly in case where complicated movements are involved, there are problems in that high skill is required, and that a change of the program cannot be made simply. With respect to the storing the operation by the play-back control, the hands are actually moved to store the operation. However, when the hands are artifically moved, it is advantageous in a narrow range but it is difficult to perform smooth operation over a long distance or a long period of time, and there is a problem in natural operation. In case of using the sequence circuit, the successive operating signals are serially oscillated by a timer to effect the operation. There is a problem in that complicated operations cannot be performed simultaneously.

## SUMMARY OF THE INVENTION

As the specific means for solving the problems of various controls as noted above with respect to the prior art, the present invention provides an object-operation control system comprising a driving source for operating an object, said driving source being controlled by one-dimensional distance and time. This is an object-operation control system in which an object which moves in two or three-dimensional space comprises driving sources corresponding to the respective dimensions, each of said driving sources being controlled every dimension, and in two or more objects provided with a driving source, the interrelation between the objects can be controlled by a digital output.

There is provided an object-operation control system in which a moving direction and a moving speed of an object over the multi-dimension are formed into one-dimension and displayed as a graph on an image plane of a computer with moving distance and time, the distance and time being suitable set on said image plane to control the operation of the object. The moving distance and time of the object are suitably set on the image plane to provide motion data, which is combined with the other motion data for control. Even complicated movements can be freely changed or adjusted and reproduced without requiring programming.

## BRIEF DESCRIPTION OF THE DRAWINGS

FIG. 1 is an explanatory view showing a first embodiment which employed a control method according to the present invention:
FIGS. 2(A) and 2(B) respectively illustrate the adjusting state of distance and time in directions of X and Z aces on the display image plane in the first embodiment;
FIG. 3 illustrates the other drive control in the drive control relation of two objects in the first embodiment;
FIG. 4 illustrates a second embodiment; and
FIGS. 5(A) and 5(B) respectively illustrate the drive control relation of two objects in the second embodiment.

## DETAILED DESCRIPTION OF THE PREFERRED EMBODIMENTS

The present invention will be described hereinafter in more detail with reference to embodiments shown in the drawings.

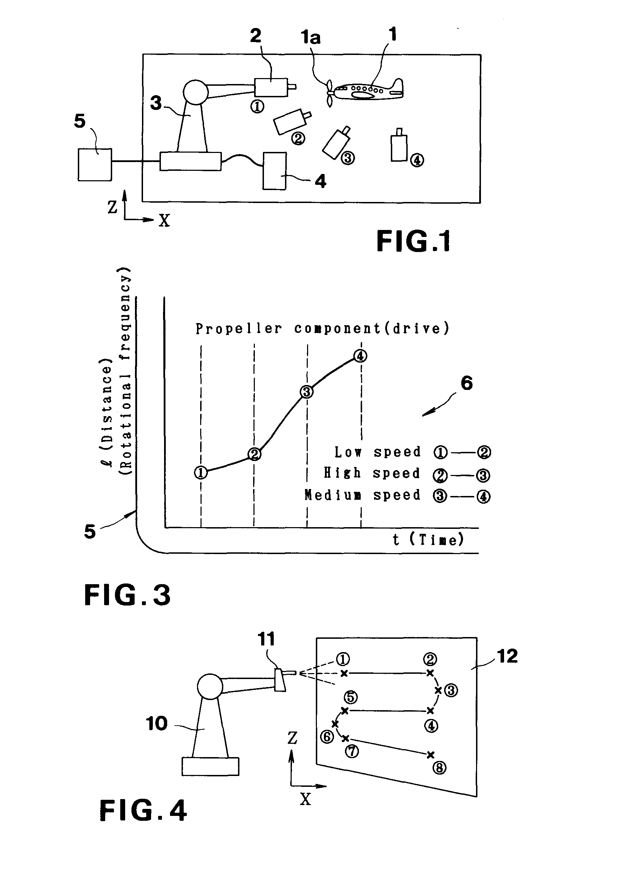

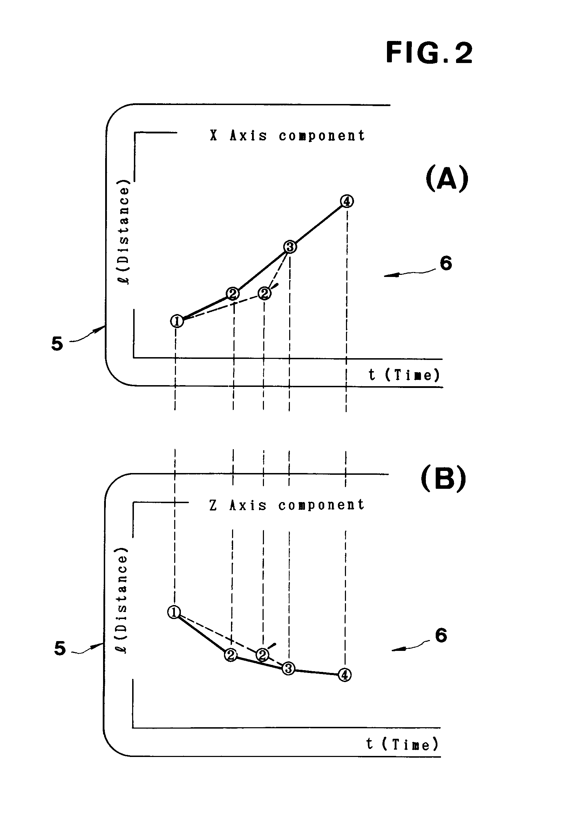

First, a first embodiment, that is, a case of specific types of photographing, shown in FIGS. 1 to 3, will be described as follows. In these drawings, reference numeral 1 designates an object such as an airplane, and 2 designates a telecamera. The telecamera is mounted on a driving source 3, for example, a robot or the line,e and said driving source 3 is successively moved to predetermined positions to photograph the object 1. In this case, the object 1 is a model of an airplane, and therefore, photographing takes place while moving the telecamera 2 side by operation of the telecamera in order to bring about flying ambience and feeling of speed. In the moving position of the telecamera 2, the telecamera is successively moved at pre-set speed passing through suitable points, for example, as shown at ① to ④ . In this movement of the telecamera 2, one kind of play-back control is utilized so that a hand-operated operating box 4 is actually operated to move the driving source 3 together with the telecamera 2, and at the same time, suitable points ① to ④ are subjected to sampling on the basis of actual moving locus of the telecamera 2 and stored in a computer 5 to effect re-editing and simulation by a graphic editor (a graph of time and position) which uses a computer mouse. That is, in the moving locus from the set position ① to the terminal position ④ of the driving source 3 and the telecamera 2, suitable points ② and ③ are subjected to sampling, and the drive of the driving source 3 and the telecamera 2 is stored in the computer 5 so as to follow the moving locus. In this case, since the moving locus of the telecamera 2 is predetermined, the moving speed to the respective sampled points is not particularly stored.

Then, as shown in FIGS. 2(A) and 2(B), the moving locus stored on an image plane 6 of the graphic editor of the computer 5 is displayed in the form of a graph of one-dimension, i.e., X-axis component and Z-axis component with the sampling points connected in the relation of distance $\ell$ and time t, and the time with respect to the moving distance or the moving distance and time are suitably adjusted on the image plane in accordance with the one-dimensional graph. For example, the points ① to ④ in each movement of the telecamera 2 previously set are displayed approximately at equal intervals (time) on the image plane 6. In order to bring about the ambience and feeling of speed of the object 1, the point ② is reset in time to a position ②' on the moving locus, that is, the point ② is moved in time toward the point ③ and corrected so that the moving time from ① to ② is increased whereas the moving time from ② to ③ is decreased. By adjusting the moving time on the image plane, the memory of the drive in the computer 5 is adjusted whereby in the actually photographing, the telecamera 2 is slowly moved from ① to ② and quickly moved from ② to ③ , which brings about the ambience and feeling of speed as if the object 1 approaches from a far point and passes through before one's eyes.

Further, the telecamera 2 can be driven in connection with the object 1. That is, as shown in FIG. 3, on the image plane 6 of the graphic editor in the computer 5, the moving locus of the camera and the passage speed of the respective points are one-dimensionally set (FIGS. 2(A) and 2(B)) as described above, and when rotation of, for example, a propeller 1a of the object 1 is controlled accordingly, a one-dimensional graph is prepared and made to correspond to the movement of the telecamera 2 to change the rotational speed. That is, when the telecamera 2 moves from the point ① to ② , the rotation of the propeller 1a is suppressed, and in order to bring about the ambience and feeling of speed when the telecamera 2 approaches the object 1, the point may be moved or changed so as to increase the rotation of the propeller.

Changes on the graphs are stored in the computer 5 to simultaneously control the respective driving sources. Accordingly, by merely changing the position of the points on the graph one-dimensionally displayed, it is possible to obtain a continuous smooth movement or drive irrespective of linear or curve or high- or low speed. Four suitable sampling points in connection with the moving locus have been shown. However, in case of complicated movements, a number of sampling points may be set.

Anyhow, with respect to the movement or operation of a driving object, suitable points are subjected to sampling in advance by manual operation, a graph is prepared by a graphic editor or the basis of linear interpolation, spline interpolation, etc., and passage time, passage speed or passage position, etc. at suitable points can be freely set in accordance with the graph. The computer 5 calculates $d\ell/dt$ every time which momentarily changes in accordance with the graph, and feeds electric energy of voltage or frequency (including the number of pulses) corresponding to the $d\ell/dt$ to the driving source. Thereby, the driving source is driven at a speed corresponding to a speed obtained by $d\ell/dt$ to control the passage time, passage speed, passage position and the like of the object. These motion data can be preserved in a hard disk. This motion data comprises a control system in which simultaneous control of a driving source and a digital output are synchronized.

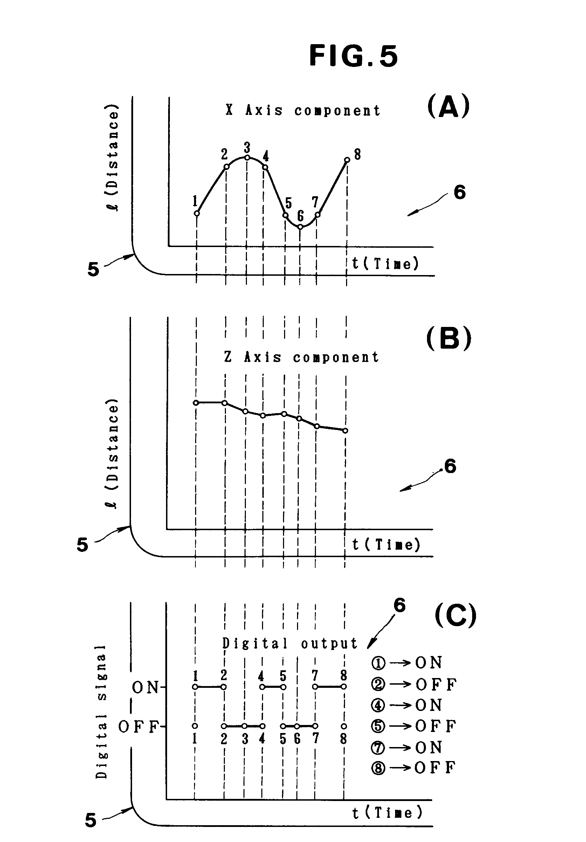

Next, a second embodiment shown in FIGs. 4 and 5, that is, control of a work robot 10 is easily accomplished. This work robot 10 is a coating robot, and display surfaces such as signboards or a surface to be coated 12 are suitably coated by a sprayer 11. Also in this case, points ① to ⑧ of suitable sampling in the moving locus of the sprayer 11 are stored in the computer, which are one-dimensionally displayed on the image plane 6 of the graphic editor or unmerically set the moving speed and coating positions or the like are determined (FIGS. 5(A) and 5(B)). In conformity with the movement of the sprayer 11 and the variation of coating positions, it has to be determined whether or not a coating material should be jetted from the sprayer, that is, how the sprayer 11 should be driven has to be determined in relation with the movement of the sprayer 11 to the coating positions and a spray of the coating material.

The drive of the sprayer is suitably set according to the graph of FIG. 5(C). In case of the illustrated embodiment, it is set so that when the sprayer 11 is moved from point ① to ②, from ④ to ⑤ and from ⑦ to ⑧, the sprayer is driven by a digital output (on or off) to jet the coating material (on-state), and in other moving points ( ③, ⑥) of position, the sprayer is not driven (off-state). Anyway, the driving source of the robot and the driving source of the sprayer are made in connection with each other, the respective graphs are prepared, and the drive thereof can be simply adjusted by distance and time on the image plane of the graphic editor in the computer.

As described above in the respective embodiments, each of displays on the image plane 6 of the graphic editor in the computer 5 is one-dimensional, and movement of an object is driven by adjustment and control of distance and time. Further, movement of an object can be controlled in relationof two-dimensional and three-dimensional movements with other plurality of objects. In either case, technical idea is common in that the respective corresponding graphs are one-dimensionally displayed on the image plane of the graphic editor in the computer, and these graphs are made in connection with each other for control of operation.

As described above, the object-operation control system according to the present invention comprises a driving source for operating an object, said driving source being controlled by one-dimensional distance and time, thereby providing excellent effects such that even complicated movements can be simply set and the object can be smoothly operated.

Furthermore, an object, which moves in two- or three dimensional space, comprises a driving source corresponding to the respective dimensions, said each of driving sources being controlled by every respective dimensions, and in two or more objects provided with a driving source, the interrelation between the objects is controlled by a digital output. Therefore, there provides an excellent effect such that operations of plurality of objects can be made in connection with each other and driven and controlled accurately.

Moreover, the moving direction and moving speed of multi-dimensional objects are formed into one-dimension and displayed as a graph on the image plane of the computer with moving distance and time, and the distance and time can be suitably set on the image plane to control the operation of the object. At the same time, the moving distance and time of the object are suitably set on the image plane to form motion data, and said motion data is able to be suitably and simply changed at any time. Even thereby, there can be provided the excellent effect such that even complicated movements can be simply set and smooth operation can be obtained without making such a programming, as done in the prior art.

Furthermore, there are excellent effects in that the motion data can be suitably preserved in a hard disk and suitably combined with other motion data and controlled, and that in the mutual combination, even complicated movements can be freely changed, adjusted and reproduced.

## Claims

1. An object-operation control system comprising a driving source (3) for operating an object (1), said driving source being controlled by one-dimensional distance and time.

2. An object-operation control system according to claim 1, wherein an object (1), which moves in two or three dimensional space, comprises a driving source (3) corresponding to the respective dimensions, said each of driving sources being controlled every respective dimensions.

3. An object-operation control system according to claim 1 or 2, wherein respective driving sources (3) for two or more objects (1) are controlled.

4. An object-operation control system according to claims 1 to 3, wherein in two or more objects (1) provided with a driving source (3), the interrelation between the objects is controlled by a digital output.

5. An object-operation control system according to claims 1 to 4, wherein a moving direction and moving speed of a multi-dimensional object (1) are formed into one dimension and displayed as a graph on an image plane (6) of a computer (5) with a moving distance and time, the distance and time being suitably set on said image plane to control the operation of said object.

6. An object-operation control system according to claims 1 to 5, wherein the moving distance and time of the object (1) on the image plane are suitably set to form motion data, which can be combined with other motion data and controlled.

**FIG.1**

**FIG.3**

**FIG.4**

5

# FIG.2

(A)

X Axis component

ℓ (Distance)

t (Time)

(B)

Z Axis component

ℓ (Distance)

t (Time)

# FIG.5

(A)

X Axis component

ℓ (Distance)

t (Time)

5   6

(B)

Z Axis component

ℓ (Distance)

t (Time)

5   6

(C)

6

Digital output

Digital signal

ON

OFF

t (Time)

5

①→ON
②→OFF
④→ON
⑤→OFF
⑦→ON
⑧→OFF

European
Patent Office

**EUROPEAN SEARCH
REPORT**

Application Number

**EP 90 11 2609**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 038 654   (HALL AUTOMATION LTD)<br>* Pages 1-3, line 3; figure 1 * | 1 | G 05 B 19/417 |
| Y | | 2-3 | |
| | – – – | | |
| X | GB-A-2 045 463   (HALL AUTOMATION LTD)<br>* The whole document * | 1 | |
| | – – – | | |
| Y | EP-A-0 323 681   (SPAR AEROSPACE LTD)<br>* The whole document * | 2 | |
| | – – – | | |
| Y | EP-A-0 084 523   (BASFER S.p.A.)<br>* The whole document * | 3 | |
| A | | 4-6 | |
| | – – – – – | | |

TECHNICAL FIELDS
SEARCHED (Int. Cl.5)

G 05 B

The present search report has been drawn up for all claims

| Place of search | Date of completion of search | Examiner |
|---|---|---|
| The Hague | 06 March 91 | RESSENAAR J.P. |